Europäisches Patentamt

European Patent Office

Office européen des brevets

(19)

(11) Numéro de publication : **0 313 462 B1**

(12)

# FASCICULE DE BREVET EUROPEEN

(45) Date de publication du fascicule du brevet :
02.10.91 Bulletin 91/40

(51) Int. Cl.⁵ : **F16F 13/00, B60K 5/12**

(21) Numéro de dépôt : **88402639.4**

(22) Date de dépôt : **20.10.88**

(54) Perfectionnements aux supports antivibratoires hydrauliques.

(30) Priorité : 23.10.87 FR 8714695

(43) Date de publication de la demande :
26.04.89 Bulletin 89/17

(45) Mention de la délivrance du brevet :
02.10.91 Bulletin 91/40

(84) Etats contractants désignés :
DE GB IT SE

(56) Documents cités :
EP-A- 0 165 095
EP-A- 0 213 043
FR-A- 2 340 834
FR-A- 2 604 231

(73) Titulaire : HUTCHINSON
2 rue Balzac
F-75008 Paris (FR)

(72) Inventeur : Grégoire, Daniel
14 Rue Louis Armand
F-28200 Chateaudun (FR)

(74) Mandataire : Behaghel, Pierre et al
CABINET PLASSERAUD 84 rue d'Amsterdam
F-75009 Paris (FR)

## Description

L'invention est relative aux dispositifs antivibratoires destinés à être interposés aux fins de support et d'amortissement entre deux éléments rigides individuellement soumis à certaines oscillations et/ou vibrations, l'amortissement faisant intervenir au moins dans certaines conditions de fonctionnement le refoulement d'un liquide à travers un passage étranglé.

A titre d'exemple non limitatif, on indique que de tels supports peuvent être montés entre un châssis de véhicule et le moteur à combustion interne de ce véhicule en vue d'amortir aussi bien les oscillations de "hachis" imposées au châssis par les irrégularités et variations de déclivité du sol lors de la circulation du véhicule sur ce sol que les vibrations dues au fonctionnement du moteur, notamment au ralenti ou encore que les chocs appliqués à ce moteur lors de ses démarrages et de ses arrêts par respectivement les premières et les dernières explosions.

L'invention concerne plus particulièrement, parmi les supports du genre en question, ceux qui sont constitués par un boîtier étanche interposé entre les deux éléments rigides, boîtier comportant une embase rigide solidarisable avec l'un des deux éléments rigides, un anneau rigide solidarisable avec l'autre élément rigide, une paroi élastique annulaire de support reliant de manière étanche l'embase à l'anneau et une membrane flexible raccordée de manière étanche à l'anneau, l'intérieur de ce boîtier étant divisé, par une cloison étanche raccordée à l'anneau entre la paroi annulaire et la membrane, en deux chambres, à savoir une chambre de travail du côté de la paroi annulaire et une chambre de compensation du côté de la membrane, ces deux chambres communiquant entre elles en permanence par le passage étranglé ci-dessus, lequel est avantageusement constitué par un canal incurvé situé dans la zone de raccordement entre la paroi annulaire et l'anneau, et une masse liquide remplissant les deux chambres ainsi que le passage étranglé.

L'invention vise plus particulièrement encore, mais non exclusivement, le cas où la cloison étanche intermédiaire comprend une portion déformable ou mobile formant "clapet" flottant et des moyens pour limiter l'amplitude des débattements de ce clapet à une faible valeur, de préférence inférieure à 0,5 mm.

Avec un tel support, les oscillations ou vibrations créées entre les deux éléments rigides ont pour effet de rapprocher et d'écarter axialement à tour de rôle ces deux éléments l'un de l'autre.

Celles, de ces oscillations, dites de "hachis", qui présentent une fréquence relativement basse (inférieure à 20 Hz) et une amplitude relativement élevée (supérieure à 0,5 mm), ont pour effet de refouler le liquide de l'une des deux chambres dans l'autre à travers le passage étranglé et inversement et, pour une valeur donnée de ladite fréquence dépendant essentiellement des cotes dudit passage, on observe un amortissement élevé des oscillations considérées par effet de résonance de la masse de liquide circulant dans ce passage.

Dans les réalisations préférées comprenant un clapet tel que défini ci-dessus, celles, des oscillations considérées, qui présentent une fréquence relativement élevée (supérieure à 20 Hz) et une amplitude relativement faible (inférieure à 0,5 mm) se traduisent par des oscillations correspondantes du clapet sans qu'il y ait véritablement de transfert de liquide à travers le passage étranglé, ce qui a pour effet de filtrer la transmission des oscillations en question de l'élément rigide où elles sont engendrées à l'autre élément rigide.

Avec les modes de réalisation connus des supports du genre en question, la masse supportée (moteur ou autre) n'est reliée à la structure portante (châssis du véhicule) que par les parois élastiques annulaires des supports.

Il peut donc arriver que certaines sollicitations anormalement élevées exercées sur la masse supportée, telles que celles dues à des décélérations ou accélérations brusques du véhicule, se traduisent par des déformations excessives de ces parois pouvant entraîner leur arrachement et leur rupture : la masse supportée n'est plus alors reliée à la structure portante et il peut en résulter de graves dommages.

Pour remédier à un tel inconvénient, il a déjà été proposé de faire comprendre aux supports considérés :

— une bague rigide intérieure à la chambre de travail et solidaire de l'anneau rigide,

— et un pied rigide prolongeant axialement l'embase vers l'intérieur de la chambre de travail, pied traversant la bague ci-dessus avec jeu et terminé par une semelle débordante ne pouvant pas traverser cette bague (voir le document EP-A-0165095).

Dans un tel cas, les déplacements mutuels de l'embase par rapport à l'anneau dans le sens de l'écartement mutuel de ces deux éléments, dus à l'exercice de fortes sollicitations sur la masse supportée, sont automatiquement limités par butée de la semelle contre la bague.

Ces constructions donnent souvent satisfaction.

Mais elles présentent certains inconvénients tels qu'un encombrement axial global relativement important, qu'un poids relativement élevé et qu'un montage difficile.

L'invention a pour but, surtout, de remédier à ces inconvénients.

A cet effet, elle met en oeuvre un accrochage mutuel de l'embase et de l'anneau rigide à l'aide d'un tronçon de câble résistant à la traction, d'une façon connue en soi par les documents FR-A-2340834 et EP-A-0 213043 pour accrocher mutuellement les deux éléments rigides d'un support élastique à base de caoutchouc.

Plus précisément, les supports du genre en question selon l'invention sont essentiellement caractérisés en ce qu'ils comprennent au moins un tronçon de câble résistant à la traction situé à l'intérieur de la chambre de travail et accroché d'une part sur l'embase et d'autre part sur l'anneau rigide de façon telle que les déplacements relatifs de l'embase par rapport à l'anneau rigide dans le sens de leur écartement axial soient limités par mise en traction dudit tronçon, en ce que ledit tronçon de câble se présente sous la forme d'un anneau continu fermé et déformé, dont l'axe est confondu avec celui du support, en ce que l'anneau comprend deux premiers segments reposant sur deux rigoles de guidage solidaires de l'embase et deux seconds segments disposés dans deux couloirs de guidage liés à l'anneau rigide et s'étendant à la périphérie de la cloison intermédiaire, et en ce que les deux premiers segments d'anneau sont reliés aux deux seconds segments par quatre troisièmes segments obliques immergés dans la chambre de travail.

Dans des modes de réalisation préférés, on a recours en outre à l'une et/ou à l'autre des dispositions suivantes :

— les quatre troisièmes segments s'étendent en divergeant à partir des deux premiers,

— les couloirs de guidage ci-dessus sont délimités en partie par un profilé circulaire échancré qui sert lui-même à délimiter en partie le passage étranglé, avec interposition éventuelle d'une couche d'élastomère,

— le tronçon de câble est constitué par un faisceau de brins résistant à la traction, faisceau enrobé dans une gaine de protection qui enrobe également au moins les rigoles de support des premiers tronçons,

— le tronçon de câble est constitué en un matériau composite formé d'une matrice en matière plastique armée de fibres continues parallèles,

— les fibres selon l'alinéa précédent sont constituées en verre, en carbone ou en un aramide tel que le poly(1,4-phénylène)téréphtalamide diffusé sous l'appellation Kevlar par la Société du Pont de Nemours.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

Les figures 1 et 2, de ces dessins, montrent un support antivibratoire hydraulique établi conformément à l'invention selon deux coupes axiales verticales perpendiculaires l'une à l'autre, savoir la première selon I-I, figure 2 et la seconde, selon II-II, figure 1.

Les figures 3 et 4 montrent respectivement en plan et en vue perspective le câble annulaire qui équipe ce support, la figure 4 faisant apparaître en outre la pièce d'accrochage dudit câble sur l'embase du support.

Les figures 5, 6 et 7 montrent le câble annulaire équipant un autre support hydraulique selon l'invention, avec ses pièces d'accrochage, en respectivement deux coupes axiales selon V-V et VI-VI, figure 7 et en plan.

Dans chaque cas, le support considéré est en général destiné à être interposé verticalement ou selon une direction légèrement inclinée sur la verticale entre un organe porteur rigide constitué par un châssis de véhicule et un organe supporté rigide constitué par un moteur à combustion interne.

Les termes "haut, bas, supérieur, inférieur, cuvette", utilisés dans la description qui suit, le sont à titre d'exemple non limitatif car le support décrit peut parfaitement être utilisé à l'envers du sens adopté pour cette description.

Le support se présente sous la forme générale d'un boîtier étanche de révolution autour d'un axe X comportant :

— un anneau rigide 1 rapporté sur le bord extérieur d'une cuvette métallique 2, laquelle porte en attente un boulon 3 de fixation de cette cuvette sur le châssis du véhicule,

— une embase supérieure 4 en forme de plot évidée par un trou borgne fileté 5 ouvert vers le haut et propre à recevoir un boulon de fixation de cette embase sur le moteur du véhicule,

— une paroi annulaire élastique 6 suffisamment épaisse pour transmettre les charges du moteur au châssis, paroi délimitée en substance par deux surfaces tronconiques évasées vers le bas et dont la petite base, disposée en haut, est adhérée contre l'embase 4, sa grande base inférieure étant raccordée de façon étanche à l'anneau 1,

— et une membrane inférieure étanche et flexible 7 contenue à l'intérieur de la cuvette 2, le bord de cette membrane étant fixé de façon étanche sur l'anneau 1.

Une cloison intermédiaire 8 divise l'intérieur du boîtier ainsi formé en deux chambres, savoir une chambre de travail supérieure A et une chambre de compensation ou d'équilibrage inférieure B.

Le pourtour 9 de la cloison 8 est à cet effet raccordé de façon étanche à l'anneau 1, entre la paroi épaisse 6 et la membrane 7.

Un passage étranglé 10 fait communiquer en permanence les deux chambres A et B entre elles.

Ce passage 10 est ici constitué par au moins un canal incurvé s'étendant selon un arc de cercle autour de l'axe X, canal évidé dans le pourtour de la cloison 8.

La portion centrale de la cloison intermédiaire 8 est constituée par une membrane flexible 11 dont l'amplitude des débattements est limitée à une faible valeur, notamment de l'ordre de 0,5 mm, par une armature interne 12 noyée dans cette membrane.

Une masse liquide L remplit les chambres A et B ainsi que le canal 10.

En outre, et pour interdire toute rupture de la paroi annulaire élastique 6, notamment par étirement axial, lors de l'exercice de fortes sollicitations sur l'embase 5 par rapport à l'anneau 1, par exemple en raison d'une brusque accélération ou décélération du véhicule, on accroche cette embase sur cet anneau à l'aide d'au moins un tronçon de câble 13 résistant à la traction.

Ce tronçon est dimensionné et agencé de façon telle qu'il soit mis en traction lorsque l'écartement mutuel entre l'embase et l'anneau atteint une valeur considérée comme un seuil maximum à ne pas dépasser.

Le tronçon de câble se présente sous la forme d'un anneau continu et fermé, mais déformé.

L'accrochage de ce câble annulaire 13 sur l'embase 4 est assuré en plaçant deux segments rectilignes parallèles $13_1$ dudit câble dans respectivement deux rigoles parallèles 14 prévues le long des deux bords opposés d'une plaquette épaisse et déformée 15, laquelle est sertie au-dessous de l'embase.

L'accrochage du câble 13 sur l'anneau rigide 1 est assuré en plaçant deux segments incurvés $13_2$ dudit câble dans deux tronçons d'un couloir annulaire 16 ménagé à la périphérie de la cloison intermédiaire 8.

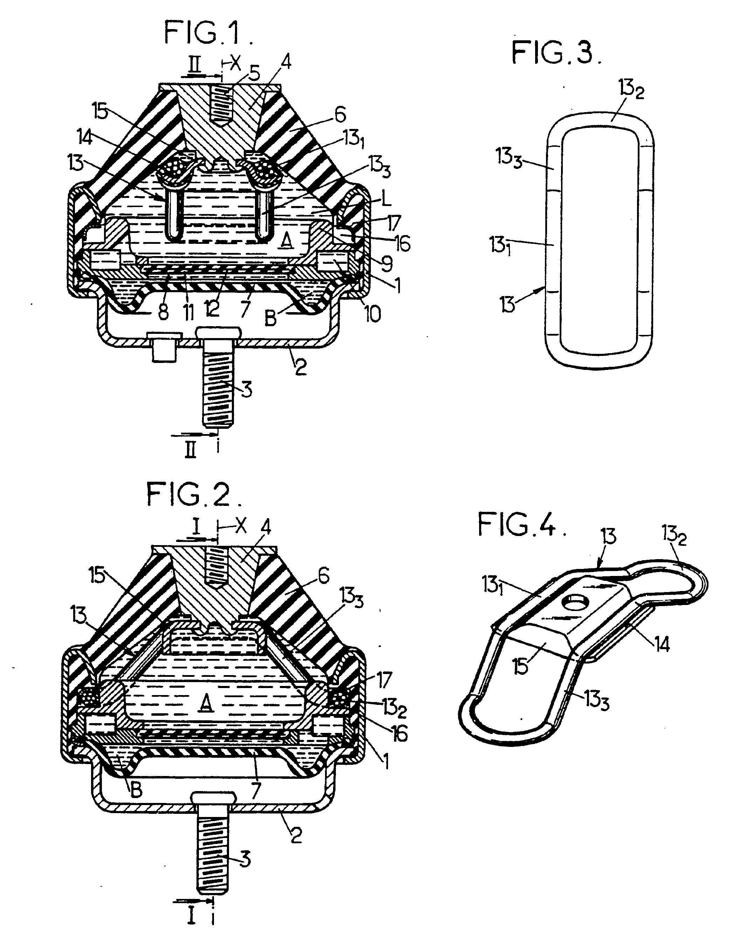

Dans le mode de réalisation des figures 1 à 4, ces tronçons de couloir 16 sont disposés autour d'un épaulement ou gradin périphérique 9 de ladite cloison intermédiaire 8 : plus précisément, ils sont limités intérieurement et inférieurement par des portées annulaires dudit épaulement périphérique 9, extérieurement et supérieurement par deux portées annulaires de l'anneau rigide 1, avec interposition, pour ces dernières portées, d'une couche d'élastomère venue de moulage avec la paroi 6.

La portée annulaire supérieure est par exemple constituée par la tranche terminale du bord annulaire supérieur, rabattu vers l'intérieur et vers le bas, d'une virole extérieure constitutive de l'anneau 1.

En outre, un jonc de protection semi-torique 17 est prévu pour recouvrir les segments incurvés de câble $13_2$ dont il vient d'être question, ainsi que visible sur la figure 2.

Comme bien visible sur les figures 1 à 4, les segments rectilignes $13_1$ et incurvés $13_2$ sont reliés entre eux par quatre segments rectilignes obliques $13_3$ immergés dans la chambre de travail A.

La longueur du câble 13 est choisie de façon telle :

— que ce câble se présente dans un état non tendu, c'est-à-dire "flottant", lors du fonctionnement normal du support sous charge, ce qui n'affecte alors aucunement les divers amortissements dévolus au support,

— et que la mise en tension maximum dudit câble corresponde à la déformation maximum admissible pour la paroi 6 lors de l'exercice d'une forte traction axiale sur l'embase 4 par rapport à l'anneau 1, traction se traduisant par un écartement axial mutuel de ces deux pièces.

Bien entendu, la nature et la section du câble 13 sont choisies de façon telle que celui-ci puisse encaisser sans déformation ni rupture les efforts de traction appliqués sur lui à partir de l'instant où il a atteint son état de tension maximum.

Le câble 13 est avantageusement constitué par un faisceau de brins individuels, parallèles ou torsadés, qui peuvent être métalliques, le faisceau étant alors enrobé d'une gaine de protection par rapport au liquide L.

Il peut également être constitué par des torons en un matériau composite présentant une grande résistance mécanique à la traction et comportant des fibres continues parallèles noyées dans une matrice en matière plastique.

Lesdites fibres sont notamment constituées en verre, en carbone, ou en un aramide tel que celui diffusé sous l'appellation Kevlar par la Société du Pont de Nemours (il s'agit d'un poly(1,4-phénylène)téréphtalamide) ou que celui diffusé sous l'appellation Twaron par la Société Akzo : les torons à base de fibres de verre réalisés de la sorte présentent une résistance à la rupture par traction supérieure à 1 $kN/m^2$.

Les torons en question peuvent être eux-mêmes enrobés de tout gainage désirable.

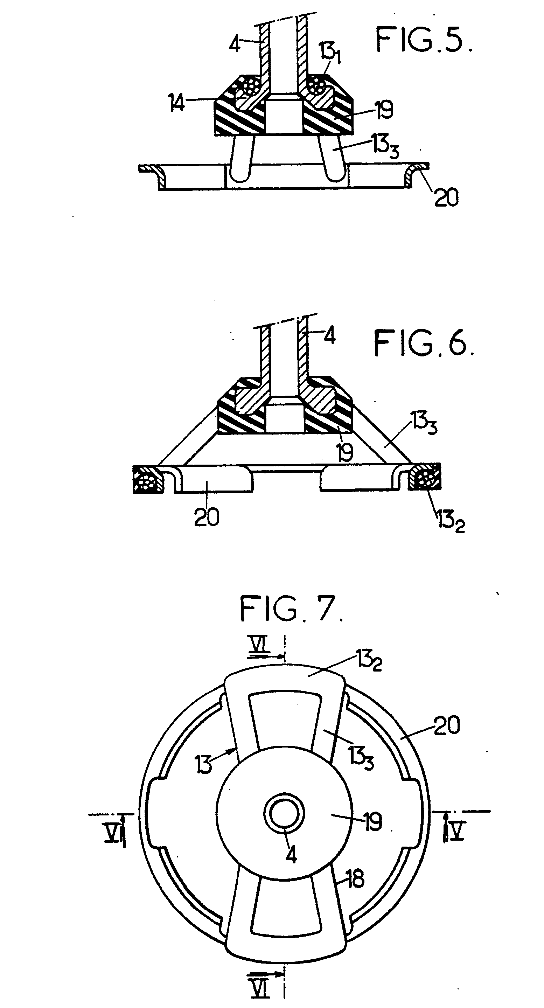

Dans le mode de réalisation reproduit en partie sur les figures 5 à 7, les éléments identiques à ceux décrits ci-dessus ont été affectés des mêmes références que précédemment.

En outre, pour tenir compte de la conicité de la paroi 6, les deux rigoles 14 sont très rapprochées de sorte que les segments de liaison obliques $13_3$ s'étendent en divergeant à partir de ces rigoles.

Vu le montage proposé pour le câble annulaire 13, il est possible de préformer ce câble en sa forme continue fermée, par exemple par bobinage de brins, puis de l'enrober d'un gainage 18 en élastomère ou analogue.

Ce gainage 18 peut être prolongé autour des rigoles 14 de façon notamment à former sous celles-ci un coussin 19.

Ce coussin 19 permet d'amortir souplement les écrasements axiaux du support par son application, avec compression progressive, contre une portée en regard appropriée, telle qu'une grille métallique de limitation des débattements de la membrane 11 cidessus.

Ledit coussin 19 peut également être utilisé pour l'effet "piston" qu'il peut exercer du fait qu'il peut délimiter intérieurement, au sein de la chambre de travail A, un passage annulaire étranglé jouant un rôle antivibratoire au même sens que le passage 10.

L'ancrage des "seconds tronçons" $13_2$ du câble annulaire est ici assuré à l'aide d'un profilé annulaire 20 en L, échancré localement, qui peut servir lui-même à délimiter partiellement le passage étranglé 10 ci-dessus, avec éventuellement interposition locale d'une couche d'élastomère.

En suite de quoi, et quel que soit le mode de réalisation adopté, on dispose finalement d'un support antivibratoire hydraulique dont la constitution et le fonctionnement résultent suffisamment de ce qui précède.

Ces supports présentent sur ceux antérieurement connus l'avantage d'offrir une très grande résistance à l'arrachement par traction, et ce moyennant un encombrement axial relativement faible et un aspect extérieur tout à fait identique à ceux des supports du même genre antérieurement connus, les câbles d'amarrage susceptibles de résister aux efforts de traction étant disposés à l'intérieur desdits supports.

Ils présentent également une bonne résistance aux sollicitations radiales, résistance qui est différente selon les directions radiales puisqu'elle est plus élevée selon le plan qui relie l'axe aux milieux des seconds tronçons que selon le plan perpendiculaire à ce plan.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes couvertes par les revendications.


## Revendications

1. Dispositif antivibratoire hydraulique destiné à être interposé entre deux éléments rigides comportant une embase rigide (4) solidarisable avec l'un des deux éléments rigides, un anneau rigide (1) solidarisable avec l'autre élément rigide, une paroi élastique annulaire de support (6) reliant de manière étanche l'embase à l'anneau rigide et une membrane flexible (7) raccordée de manière étanche à l'anneau rigide, l'intérieur du boîtier étanche ainsi formé étant divisé, par une cloison étanche (8, 9) raccordée à l'anneau rigide entre la paroi annulaire et la membrane, en deux chambres, à savoir une chambre de travail (A) du côté de la paroi annulaire et une chambre de compensation (B) du côté de la membrane, ces deux chambres communiquant entre elles en permanence par un passage étranglé (10), et une masse liquide (L) remplissant les deux chambres ainsi que le passage étranglé, caractérisé en ce qu'il comprend au moins un tronçon de câble (13) résistant à la traction situé à l'intérieur de la chambre de travail (A) et accroché d'une part sur l'embase (4) et d'autre part sur l'anneau rigide (1) de façon telle que les déplacements relatifs de l'embase par rapport à l'anneau rigide dans le sens de leur écartement axial soient limités par mise en traction dudit tronçon de câble, en ce que ledit tronçon de câble (13) se présente sous la forme d'un anneau continu fermé et déformé dont l'axe (X) est confondu avec celui du dispositif, en ce que l'anneau comprend deux premiers segments ($13_1$) reposant sur deux rigoles de guidage (14) solidaires de l'embase (4) et deux seconds segments ($13_2$) disposés dans deux couloirs de guidage (16) liés à l'anneau rigide (1) et s'étendant à la périphérie de la cloison intermédiaire (8, 9), et en ce que les deux premiers segments d'anneau ($13_1$) sont reliés aux deux seconds segments ($13_2$) par quatre troisièmes segments ($13_3$) immergés dans la chambre de travail (A).

2. Dispositif antivibratoire selon la revendication 1, caractérisé en ce que les quatre troisièmes segments ($13_3$) s'étendent en divergeant à partir des deux premiers ($13_1$).

3. Dispositif antivibratoire selon l'une quelconque des précédentes revendications, caractérisé en ce que les couloirs de guidage (16) sont délimités en partie par un profilé circulaire échancré (20) qui sert lui-même à délimiter en partie le passage étranglé (10), avec interposition éventuelle d'une couche en élastomère.

4. Dispositif antivibratoire selon l'une quelconque des précédentes revendications, caractérisé en ce que le tronçon de câble est constitué en un matériau composite formé d'une matrice en matière plastique armée de fibres continues parallèles.

5. Dispositif antivibratoire selon la revendication 4, caractérisé en ce que les fibres sont constituées en verre, en carbone ou en un aramide tel que le poly(1,4-phénylène)téréphtalamide diffusé sous l'appellation Kevlar par la Société du Pont de Nemours.

6. Dispositif antivibratoire selon l'une quelconque des précédentes revendications, caractérisé en ce que le tronçon de câble est constitué par un faisceau de brins bobinés résistant à la traction.

7. Dispositif antivibratoire selon l'une quelconque des précédentes revendications, caractérisé en ce que le tronçon de câble est enrobé dans une gaine de protection (18) qui enrobe également au moins les rigoles (14) du support des premiers tronçons ($13_1$).


## Patentansprüche

1. Hydraulisches Antischwingungslager, das zwischen zwei starren Elementen einfügbar ist und aus folgenden Teilen besteht : einem starren Verbindungsstück (4), das an einem der starren Elemente anbringbar ist, einem starren Ring (1) der an dem anderen starren Element anbringbar ist, einer ringförmigen elastischen Stützwandung (6), die das Verbindungsstück dicht mit dem Ring verbindet und einer biegsamen Membran (7), die dicht mit dem Ring verbunden ist, wobei der Innenraum des so gebildeten dichten Gehäuses durch eine dichte Trennwand (8, 9), die mit dem starren Ring zwischen der ringförmigen Wandung und der Membran verbunden ist, in zwei Kammern, nämlich eine Arbeitskammer (A) auf der Seite der ringförmigen Wandung und eine Kompensationskammer (B) auf der Seite der Membran unterteilt ist, die beiden Kammern dauernd über eine verengte Durchgangsöffnung (10) miteinander in Verbindung stehen und die beiden Kammern sowie die verengte Durchgangsöffnung mit einem flüssigen Medium (L) gefüllt sind, dadurch gekennzeichnet, daß das Antischwingungslager wenigstens ein gegen Zugbeanspruchung widerstandsfähiges Kabelstück (13) enthält, das im Inneren der Arbeitskammer (A) angeordnet und einerseits an dem Verbindungsstück (4) und andererseits an dem starren Ring (1) so eingehängt ist, daß die Relativverschiebungen zwischen dem Verbindungsstück und dem starren Ring in Richtung einer axialen Vergrößerung ihres Abstandes dadurch begrenzt werden, daß das Kabelstück auf Zug beansprucht wird, daß das Kabelstück (13) die Form eines durchgehenden, geschlossenen und deformierten Ringes hat, dessen Achse X mit der des Lagers zusammenfällt, daß der Ring aus zwei ersten Abschnitten (13₁), die auf zwei an dem Verbindungsstück befestigten Führungsrinnen (14) aufliegen und zwei zweiten Abschnitten (13₂) besteht, die in zwei Führungskanälen (16) angeordnet sind, die mit dem starren Ring (1) verbunden sind und sich am Umfang der Trennwand (8, 9) erstrecken und daß die beiden ersten Ringabschnitte (13₁) mit den beiden zweiten Abschnitten (13₂) über vier dritte Ringabschnitte (13₃) verbunden sind, die in die Arbeitskammer (A) eintauchen.

2. Antischwingungslager nach Anspruch 1, dadurch gekennzeichnet, daß die vier dritten Abschnitte (13₃) ausgehend von den beiden ersten Abschnitten (13₁) divergierend verlaufen.

3. Antischwingungslager nach einem der vorhergehenden Ansprüche, dadurch gekennzeichnet, daß die Führungskanäle (16) teilweise durch ein kreisförmiges gekrümmtes Profil (20) begrenzt sind, das seinerseits teilweise den verengten Durchgang (10) gegebenenfalls unter Einfügen einer Schicht aus elastomerem Material, begrenzt.

4. Antischwingungslager nach einem der vorhergehenden Ansprüche, dadurch gekennzeichnet, daß das Kabelstück aus einem zusammengesetzten Material besteht, das aus einer Matrix aus plastischem Material gebildet ist, die mit durchgehenden parallel verlaufenden Fasern verstärkt ist.

5. Antischwingungslager nach Anspruch 4, dadurch gekennzeichnet, daß die Fasern aus Glas, Kohlenstoff oder einem Aramid wie z.B. Poly (1,4-phenylenterephthalamid) bestehen, das unter der Handelsbezeichnung Kevlar von die Firma Du Pont de Nemours vertrieben wird.

6. Antischwingungslager nach einem der vorhergehenden Ansprüche, dadurch gekennzeichnet, daß das Kabelstück aus einem Bündel von gewickelten Fäden besteht, das gegen Zugbeanspruchung widerstandsfähig ist.

7. Antischwingungslager nach einem der vorhergegenden Ansprüche, dadurch gekennzeichnet, daß das Kabelstück von einer Schutzhülle (18) umgeben ist, die gleichzeitig wenigstens die Führungsrinnen (14) der ersten Abschnitte (13₁) umgibt.

## Claims

1. Hydraulic antivibratory device for being placed between two rigid elements, comprising a rigid base (4) able to be fixed to one of the two rigid elements, a rigid annulus (1) which can be fixed to the other rigid element, a resilient annular support wall (6) sealingly connecting the base to the annulus and a flexible membrane (7) connected sealingly to the annulus, the inside of the so formed sealed case being divided, by a sealed dividing wall (8, 9) connected to the annulus between the annular wall and the membrane, into two chambers, namely a work chamber (A) on the annular wall side and a compensation chamber (B) on the membrane side, these two chambers permanently communicating with each other through a restricted passage (10), and a liquid mass (L) filling the two chambers as well as the restricted passage, characterized in that it comprises at least one flexible traction resistant cable section (13) situated inside the work chamber (A) and secured both to the base (4) and to the rigid annulus (1) so that the relative movements of the base with respect to the rigid annulus in their axial mutual moving away direction are limited by said cable section being placed under traction, in that the cable section (13) is in the form of a continuous closed and deformed annulus, whose axis (X) merges with that of the device, in that the annulus has two first segments (13₁) resting on two guide channels (14) fixed to the base (4) and two second segments (13₂) disposed in two guide slots (16) associated with the annulus (1) and extending at the periphery of the intermediate dividing wall (8, 9) and in that the first two above annular segments (13₁) are connected to the second two segments (13₂) by four oblique segments (13₃) immersed in the work chamber (A).

2. Antivibratory device according to claim 1, characterized in that the four third segments (13₃) extend away from the first two (13₁).

3. Antivibratory device according to any one of the preceding claims, characterized in that the guide slots are partially defined by a circular indented profiled piece (20) which itself serves for partially defining the restricted passage (10), with possible interpositioning of an elastomer layer.

4. Antivibratory device according to any one of the preceding claims, characterized in that the cable section is made from a composite material having a plastic material matrix reinforced by parallel continuous fibres.

5. Antivibratory device according to claim 4, characterized in that the fibres are made from glass, carbon or an aramide such as poly(1,4-phenylene)terephtalamide commercialized under the name Kevlar by the firm du Pont de Nemours.

6. Antivibratory device according to any one of the preceding claims, characterized in that the cable section is formed by a bundle of coiled traction resistant strands.

7. Antivibratory device according to any one of the preceding claims, characterized in that the cable section is coated with a protective sheath (18) which also coats at least the channels (14) supporting the first sections ($13_1$).

# FIG.1.

# FIG.3.

# FIG.2.

# FIG.4.

FIG.5.

FIG.6.

FIG. 7.